# EUROPEAN PATENT SPECIFICATION

(11) **EP 4 259 507 B1**
(45) Date of publication and mention of the grant of the patent: **22.07.2026**
(21) Application number: 21901716.7
(22) Date of filing: 09.12.2021
(51) Int. Cl.: B62B 5/00, B60B 19/00, B60B 19/12, A47G 7/04

(54) **SUPPORT DOLLIE**
STÜTZWAGEN
CHARIOT DE SUPPORT

(30) Priority: 09.12.2020 AU 2020904579
(43) Date of publication of application: 18.10.2023
(73) Proprietor: ROTACASTER WHEEL PTY LTD, Cranbourne VIC 3977 (AU)
(72) Inventor: MCKINNON, Peter, Cranbourne, Victoria 3977 (AU)
(74) Representative: Michalski Hüttermann & Partner mbB
(86) International application number: PCT/AU2021/051472
(87) International publication number: WO 2022/120430

(56) References cited:
- CN-A- 111 801 261
- CN-U- 206 745 854
- JP-A- 2007 022 342
- JP-A- 2014 046 890
- US-A- 5 323 867
- US-A1- 2011 105 288
- US-A1- 2020 216 129
- US-B1- 6 488 293
- US-B1- 6 491 127
- US-B2- 9 616 707
- US-S- D 381 171

## Description

### FIELD OF INVENTION

This invention relates to a support dollie or trolley, in the form of a platform with wheels, for supporting a supported item. More particularly, this invention relates to a moveable support dollie for supporting technical equipment in commercial or industrial applications, medical devices and equipment in hospital and other medical environments, and portable plants in greenhouse, domestic and horticultural settings. Still more particularly, this invention relates to a moveable support dollie for supporting pot plants.

### BACKGROUND ART

Support dollies may be useful in a number of applications, particularly in environments in which heavy or awkward items are advantageously made mobile. Such items may be permanently supported for periodic movement across relatively flat and/or smooth man-made surfaces.

Although not strictly a dollie, US 9,616,707 (Amazon Technologies, Inc.) describes a mobile conveyor with a platform and hybrid multiple directional and rack climbing wheels. The wheels are exposed and unprotected, and aligned in linear, rectangular arrangements for track engagement.

US 11,305,645 (Crosswing, Inc.) discloses a driven wheel base for unlimited robotic applications in which the 3 omniwheels are aligned in circumferential planes and partially exposed to external buffeting by virtue of being housed in outwardly open hubs.US 6,491,127 (3Com Corporation) describes a driven caster wheel base. The motors 16,18 extend vertically above and within the footprint of a platform 12 whereby to interfere with an object that might otherwise be supported thereon.

Without affecting the generality of the applications to which the invention may lend itself, one particular application of this invention relates to the mobile support of potted plants. Plants and their pots are often a source of pride and enjoyment, enhancing and beautifying our living environments, some are even a work of art. Their owners can and do spend a substantial amount of time and money procuring and caring for them.

Potted plants (plants) invariably have to move whether frequently or infrequently for a range of reasons, such as protection from or better exposure to the elements, cleaning or maintain the area under or around them, watering and fertilising, or simply for relocation to a more preferred location.

However, pot plants can be heavy, moving them may involve bending down and lifting, which may expose the carrier to back or other musculoskeletal strain or injury.

In the case of plant dollies, most commercially available models use swivel castors with a platform construction that lacks durability and has poor load-bearing properties. The generic swivel offset and mounting of a castor creates a limitation to both the functionality and aesthetics of the dollie as well as potential durability.

The fundamental function of a support dollie is to make it easy to move the supported item across a range of surfaces without having to lift and carry them each time.

Ideally, if possible, this needs to be accomplished without:
1. requiring a large amount of effort to move and/or control its direction (needs to be manoeuvrable and controllable);
2. easily tipping over or stopping on minor obstructions or holes (load stability and the ability to traverse over gaps and minor changes in the surface); and/or
3. rolling away on minor inclines or in the wind - a function that may require the application of a brake or wheel stop in prior art dollies (to prevent roll-away).

The swivel offset of the castor and its inherent lead-follow relationship introduces a number of challenges in regard to the above requirements. While this gives the swivel castor its greatest advantage, it's fluidity, this is also its greatest weakness for the following reasons:
1. Directional control: while this is not an issue on small loads, as loads increase, directional control tends to require greater levels of force to maintain or change the direction of the platform's momentum which can be difficult on low heavy supported items, such as plants/pots, as it may require a user to bend, push and twist). In addition, the reactivity of the swivel to any obstruction can introduce unwanted directional changes requiring more input for correction of the misdirection or undesirable tipping of the supported item.
2. Stability: the lead-follow relationship of the swivel caster means there is a dynamic relationship between the centre of load and the wheelbase. When pushing, the centre of load moves slightly forward, increasing the risk of it tipping over (forward) if it encounters an obstruction. This can be catastrophic if the load is a heavy ceramic or otherwise breakable item. Also, the additional height required for a swivel caster mount over its wheel size, adds to this risk.
3. Roll-away: while many man-made surfaces such as concrete pavement, cement slab, tiled and linoleum surfaces, and other synthetic surfaces, including most balconies, decks, patios and/or gardens, may have cross falls, inclines or pitch of 2 degrees or less, swivel castors (with their fluidity) respond to the smallest of inclines unless braked. The problem here is that if the brakes are only on one or a couple of the swivel casters, then depending on the direction that the dollie is moved relative to the castor with the brake, it may not be accessible to the user i.e. the brake actuator may end up inaccessibly under the dollie supporting a weight too great for the operator to manually shift whilst braked, requiring some thought and manipulation to access and deactivate it.

Irrespective of the cost, and a particularly galling issue for users, is the relatively short life-span of most commercially available plant dollies.

Having spent considerable time and effort to procure a dollie, mount a heavy or awkward item onto it and move it into place, it is quite frustrating if in a matter of months it simply will no longer move due to either corrosion or a collapsed caster, or to have a caster collapse as the user is in the process of moving it, along with the risk of damaging the supported item, such as an expensive pot and/or plant.

This comes down not only to the quality of materials, components and the environment in which they are used, but also the generic cantilever design and mount fixings of swivel casters, which have been found by the Applicant to place additional forces on the wheel and fixings compared to a fixed wheel due to the inherent vertically and axially offset load relative to the ground-contacting position of the caster wheel.

Corrosion can also be a major cause of failure and while many dollie platforms and wheels do use non-corrosive materials (resin-based plastics) they invariably include key (critical or essential) metal components that are subject to corrosion, which can be especially problematic in coastal, acidic (and other chemically corrosive) or high moisture environments.

In terms of aesthetics, casters may not be the most attractive design element of a support dollie, yet often are quite visually obvious and difficult to obscure in a recess due to the wide swing and large sweep inherent in their operation. Also, there is the need to provide clearance to allow a swivel caster to freely rotate about its swept radius and to accommodate the height of a caster by raising the platform height which further adds to their unwanted visibility and diminishes their appeal.

Recent innovations include using a skirted or enclosed design style to hide the casters. However, this necessitates that the vertical axle and mount of the caster be moved inward toward the centre to clear the skirt, resulting in a smaller wheelbase, larger platform overhang and a less stable wheel base. This further reduces load stability and increases the risk of the dollie overturning when moving.

With specific reference to the plant dollie application, to date, the plant trolley/dolly market offering has been limited to the use of swivel castors (casters- USA) and since irrespective of the quality of the swivel castor used, their inherent and generic swivel offset design with a lead follow relationship with the platform, has substantial shortcomings to the functionality, durability and aesthetics. With the quality of caster unable to overcome many of these shortcomings, it has also led to the commoditisation of these products based primarily on cost.

Within the market there is little in the way of a product consistent with the beauty and care required of a many customers' investment in their plants and pots. Not only do the existing ones, not look great under that beautiful pot, they often don't last or overturn easily when moving, or simply collapse under the load.

People spend a lot of money on their plants and pots and are often a source of pride and enjoyment.

However, potted plants (plants) have to move to varying extents for a range of reasons such as protection from or better exposure to the elements, cleaning or maintain the arear under or around them, watering and fertilising, or simply relocation to a more preferred location.

For those with many plants and a constant need to move them, hand trolleys (hand trucks) with garden or mini-pallets are often the best option, however, most households have a limited number of pots and the go to option for good reason tends to be a plant Dollie (dolly).

To date, the market offering has been limited to the use of swivel castors (casters- USA) and due to the fact that irrespective of the quality of the swivel castor used, the generic swivel offset and mounts of a castor introduces limitation to the functionality, durability and aesthetics of these dollies.

Subsequently given these limitations and the absence of a viable alternative, cost often becomes the primary decision driver, resulting in manufacturers using low cost, low-quality castors, further compounding the performance of these dollies.

Despite customer demand for a plant trolley to move potted plants safely and consistently, many quality and specialist retailers do not to stock incumbent offerings, possibly due to this commoditisation and the prior absence of one consistent with the quality of their pots and plant offering, customer disappointment and returns due to failure.

An object of the present invention is to ameliorate one or more of the aforementioned disadvantages of the prior art and in the inventive arrangement to at least provide a useful alternative thereto.

### STATEMENT OF INVENTION

A dollie for supporting an object, the dollie comprising:
a holder adapted to support the object above a support surface such that the object rests securely on or in, or is secured to, one or more points of support on the holder;
a mobile structure that supports the holder above the support surface and comprises an outer peripheral body and a wheel set comprising a plurality of wheels;
characterised in that:
   each wheel of the plurality of wheels:
      is spaced radially from a centre point of the holder;
      is aligned to rotate in a plane extending radially from the centre point;
      is spaced about the peripheral body from each other adjacent wheel of the wheel set; and
   has a fixed main axis of rotation oriented transverse to a radial line extending from the centre point; the wheel set includes three or more omni-wheels; and a wheel support frame of each wheel is housed in a cavity defined by inner and outer walls of the holder.

Preferably, the dollie includes a wheel base with only omni-directional wheels that are radially arranged so that the planes in which the main wheel rotates about the main axis is in a radial plane extending from the centre point. In another preferred embodiment, the wheel base includes a combination of omni-wheels and slightly smaller fixed wheels with a fixed orientation to one another, preferably also oriented such that their main axes are aligned transverse to a radial plane extending from the centre point.

Preferably, the support dollie does not include a swivel castor or fixed castor mounts. Instead, the omni wheels can be mounted in any vertical orientation and arrangement while still maintaining multi-directional capability. This reduces the overall height of the platform required to house the omniwheels relative to an equivalent arrangement using caster wheels.

Preferably, the support dollie wheel set does not include one or more caster wheels.

The invention is defined in the claims.

### ADVANTAGES

The inventive wheel base provides distinct advantages with regard to function, durability, aesthetics, life cycle, complexity of manufacture and environmental aspects.

In particular, the inventive support dollie or wheeled platform addresses one or more of the following issues:
i) Load stability both when stationary and during movement;
ii) Directional control;
iii) Capability and consistency to traverse gaps or obstructions with minor changes in levels without refusal or getting stuck resulting, to prevent, for example, overturning;
iv) Aesthetics;
v) Life cycle durability, robustness and reduction in environmental impact, as well as ease of manufacture.

With regard to directional control, it has been found by the Applicant in testing of omniwheels installed on dollies for trial purposes, that because omni wheels use a fixed orientation they respond directly to the force applied.

In relation to stability, it has been found by the Applicant that the omniwheel has greater stability compared to a caster because an omni wheel has a fixed relationship with the centre of load. Furthermore, it does not need a swivel or fixed caster mount, thereby allowing for a lower platform height for the equivalent omniwheel compared to a corresponding caster, and reduces the risk of tipping. In addition, the multiple fixed wheel orientations allow the support dollie of the invention to traverse gaps and ridges more easily than a caster wheel-supported dollie, without refusals or tipping compared to similar-sized swivels.

As to aesthetics, the support dollie preferably provides a plinth-like appearance using a simple structure. The support dollie may have a generally circular, toroidal or doughnut in shape. with the support dollie may have a clean deep face comprising a substantially cylindrical outer wall. The fixed orientation of the omni wheels allows them to be statically located immediately adjacent to the perimeter of the dollie, unlike their prior art caster counter-parts. This may have the effect of optimising the width of the wheelbase, in that the ground-contacting position of the omniwheel relative to a centre-point of a frame or housing of platform or structure of the support dollie remains consistent, irrespective of the direction that the support dollie may be moved. The layout of the support dollie platform and structure allows the dollie to complement (rather than detract from) the visual impact of the supported item, such as a potted plant. The support dollie may appear to be more like an extension, plinth or solid base to the supported item, such as a pot, rather than looking like a distinct and separate and unaesthetic element, allowing the supported item, such as a potted plant, to remain a feature, but also substantially improves load stability and diminishes the risk of overturning.

The support dollie of the invention is preferably adapted to not roll-away without the application of force on inclines/cross-falls that are less than 6 degrees, which is well beyond most pedestrian surfaces other than ramps. This is achieved due to the fixed radially oriented wheel configuration and removes the need for a brake in most situations. The omniwheels of the invention are aligned to rotate in planes extending radially from the centre-point. The result is reliable, easy, quick movement and placement while removing the risk of having forgotten to apply or actuate a brake. The inventive arrangement also mitigates the risk of damage to an actuated brake where the user has forgotten to release same prior to any attempt to move the support dollie. In high wind environments, or on inclines above 6°, blocks or wedged door stops can be readily accessed and used for added security to immobilise the support dollie.

With regard to the potential for corrosion, support dollies in industrial and horticultural applications, such as regarding pot plants and their supports, are regularly exposed to high amounts of water spray and other potentially corrosive elements. Accordingly, the support dollie may be made almost entirely of non-corrosive (resin based) materials. The metal components may be limited to stainless steel axles and/or pins for the wheels.

As to environmental aspects, the support dollie may exhibit an extended life-span compared to competitors' products and can reduce the environmental impact/footprint with less waste going to landfill over time. The support dollie can be manufactured using a substantial proportion of recyclable material.

Further advantages of the inventive arrangement include:

### Load Capacity:

Another issue is the number and breadth of points of ground contact made by the wheels that affects the load distribution over the platform, and ultimately, the load capacity of the dollie. As no ground or pedestrian surface is perfectly flat, irrespective of the number of wheels used, theoretically you can only depend on three (3) wheels sharing the load at any one point in time, in a manner that is similar in principle to a tripod support. That is why even four (4) wheeled platform load capacities are determined by multiplying the load capacity of the wheel type used, by three. The fourth wheel simply provides balance support.

In practice, the flexibility of the platform may provide some further distribution of load across the total number of wheels, providing some advantage.

Therefore, in the first embodiment of the inventive support dollie, a minimum of three only omni wheels are relied upon for the total distribution of load, thereby removing the need for a fourth multi-directional wheel. In a second embodiment, however, an additional three omni wheels are provided between the initial three omniwheels (for a total of 6 evenly circumferentially and radially spaced omniwheels) while maintaining the original layout/configuration of the initial three. The minor flexibility or deflection of the structure under load provides a relatively good distribution of the total load.

However, for the purposes of clarity, any number of wheels above three can be used with a variable level of advantage regarding load distribution and load stability.

### Load Stability & Ability to Consistently and Safely Traverse Obstructions

Load Stability is largely dependent on the number of wheels used and their relativity to the centre of gravity of the load. That is why office chairs do not have four swivel casters, they generally have a minimum of 5.

Advantageously, in a preferred form of the invention, a total of six wheels is included in the wheel set. This provides flexibility in manufacture with regard to the use of the same platform body to accommodate multiple different wheel configurations of different embodiments. This may cater for a plurality of different load capacities (and price points), yet still provide six wheels in each preferred form of the invention for load stability. For example, a 50 kg load capacity model of the inventive support dollie has three omni wheels and three standard (not omniwheels) roller wheels, while the 90 kg load capacity model has six exclusively omni wheels.

In the first embodiment, while not essential for load distribution; for load stability and the capability to traverse gaps and obstruction without getting stuck or tipping over, three slightly smaller fixed standard roller wheels can be used in the same location of the second set of omni wheels used in the second embodiment as mentioned above.

As the fixed main axis standard roller wheel is slightly smaller (48mm versus the 50mm diameter of an omni wheel in the preferred embodiments) than the omni wheels, in normal operation within the maximum recommended load, they generally do not come into contact with the ground or running surface, and so do not impede movement despite their possibly transverse (to the direction of travel) orientation, except under two circumstances.

Firstly, when the platform encounters an obstruction such as a gap or change in level (i.e. floor joints, etc.), normally this causes a refusal or rapid deceleration in momentum/movement. In this case, one of the fixed standard rollers may assist in stopping the platform from tilting, and while it may cause a minor directional change or rotation due to its orientation when it strikes the surface, it enables the platform to traverse the obstruction without refusal and mitigates the risk of the support dollie tipping over.

The three fixed rollers subsequently serve a three-fold purpose,
1. To provide the load stability of a six wheeled wheelbase while only using three multi-directional wheels
2. To ensure the platform can traverse an obstruction without refusal and/or tipping.
3. To provide additional static load capacity beyond the max. recommended load that can be inadvertently applied due impact, watering or underestimating the weight without failure of the product.

Housing of the wheels within a low-profile structure with a low outer edge or lip, such as the plinth-like holder structure, also provides some protection from overturning as the edge of the platform structure contacts the ground much earlier than most platforms mounted above a swivel castor. This may have the effect of restricting the dollies' potential tilt angle and its propensity to tip over under the same force or momentum. This feature also assists in tilting and loading a pot or load onto the dolly without it rolling or flipping out from under it.

### Centre of Load:

The centre of load also plays a big part in the above. The fixed nature of the omni wheel and rollers wheels ensure there is a static/fixed relationship between the load/or centre of gravity of the load and the wheelbase providing greater load stability with more predictable and intuitive movement than with swivel casters.

The lead/follow and rotational movement of a swivel castor about its fixing point, creates a shifting/dynamic relationship between the load/load platform/centre of gravity and the wheelbase. Further, because of this lead/follow relationship the centre of load is moved forward of the centre of the wheelbase in the direction of travel placing a greater load on the forward placed wheels. This often results in refusal or rapid deceleration of the platform when encountering an obstruction when using a similar number of wheels, whereas the proposed wheelbase can glide across, as it allows the forward wheels and load to cantilever off the rearward wheels. This is particularly true of the six wheel arrangements and their relationship to the centre of load.

### Wheel Orientation:

In a 6 wheel configuration, the fixed orientation of the omni wheels and the ability to orient them in a pattern in which they are opposed to one another allows them to be set up in a radial orientation and configuration. This contributes substantially to the advantages regarding the ability to safely and consistently traverse obstructions. While the overall combination overcomes the inherent shortcomings of swivel castors, the 6 wheel configuration also overcomes a particular shortcoming of an omni wheel, which is the limitation of the smaller outer rollers to negotiate an obstruction when approached laterally or sideways, due to the small diameter of the outer roller by relying on the rotation of the omniwheel about its main axis. The wheels of the wheel set are aligned in a radial orientation with their main axes aligned circumferentially or tangentially relative to a circular holder housing in which they are mounted. This ensures that a risk of failure to roll over an obstruction due to the size limitations of the minor peripheral rollers of the omniwheels is addressed. In contrast, if a leading wheel of the wheel set (the front-most wheel in the direction of travel) was orientated in a circumferential or tangential arrangement the small peripheral rollers would fail to clear the obstruction at times.

Another consideration is that while swivel caster wheels will generally approach an obstruction in line with the direction of travel, the centre of load of the supported item borne on the platform will generally be forward of the centre of the wheel base or closer to the balance point, thereby risking a refusal (i.e., a failure to proceed beyond the obstruction).

In contrast, advantageously, the centre of load will be in the centre of the wheel base of the support dollie of the invention. The radially arranged/oriented wheels ensure that the wheels approach an obstruction in line or at an angle that utilises the primary diameter of the (omni or standard) wheels to negotiate an obstruction. Advantageously, the use of six wheels minimises the risk of refusal and facilitates traversal of obstructions by presenting the leading wheel(s) front on (with their main axis transversely aligned to the direction of travel) to glide over a gap or obstruction.

### Manufacturing

There are preferably no non-stainless steel metal components used in the construction of the support dollie. Preferably, there are no nails, screws, bolts or nuts used in the construction of the support dollie. However, stainless steel axles, cotter pins and the like may be included.

### ALTERNATIVES and PREFERMENTS

### Support Surface

The support surface may be the ground, a floor, or a platform, etc. Ideally, the support surface is substantially flat and/or smooth to permit a rollable structure to traverse across it.

### Supported Item

Whilst the shape, form and size of the platform could change, it is the wheel base arrangement/configuration enabled by the inclusion in the wheel set of omniwheels (such omnidirectional wheels or omniwheels inherently having a fixed main axis) that provide particular advantages according to the invention. A non-exhaustive list of examples of supported items include:
i) Technical, commercial, retail, industrial and office equipment in commercial or industrial applications, such as monitors, line- control equipment, furniture, such as office chairs, mobile furniture, retail stands and displays, hotel laundry and retail clothing trolleys and frames, general purpose dollies, etc.;
ii) Medical devices and equipment, such as devices for measuring biometric, heart and other medical indications, and medical equipment such as intra-venous drips that benefit from portability to accompany ambulant patients, in hospital and other medical environments;
iii) artistic items such as sculptures; and
iv) Portable plants in greenhouse, domestic and horticultural settings, for example potted plants, seedling and sapling boxes, etc.

The object may be an artistic display, such as a sculpture, and/or a plant, including a pot plant. A plant or pot plant may receive watering, which may make the weight of the object variable. Reference to weights of objects herein refers to the object at its heaviest in a range of possible weights where the variable is the amount of water stored in the plant or pot plant. The plant may, over time, accumulate mass as part of the natural growing process.

### Dollie

The dollie may be a mobile support structure adapted to hold the object on a long time and/or permanent basis. The dollie is preferably adapted to support an object weighing up to 100kg. The dollie may be adapted to support an object weighing up to 50kg. Use of a larger wheel in a larger base increases the load capacity e.g. the 90mm wheel could be used in a larger version.

### Holder

The holder comprises one or more points of support to support the object in place. The holder may include a peripheral support. The peripheral support may correspond in shape, configuration or footprint to the peripheral body. The peripheral support and the peripheral body may be integrally formed. The peripheral support and the peripheral body may be unitarily formed. The peripheral support and the peripheral body may be the same structure. The combined peripheral support and peripheral body structure may support the mobile structure and be adapted to support the object.

The holder may be a circular structure. The holder may be toroidal in shape. The holder may be doughnut/donut shaped. The holder may define a central hole. The central hole may be sized and shaped to receive a lower portion of the object. The central hole may be defined by a part-cylindrical or frusto-conical inner-facing wall. Extending across the central hole may be a horizontal plate, web of straps, radially or inward extending spokes or arms protruding upwardly and/or inwardly to provide one or more points of support. Preferably, the one or more points of support is provided by a flat upper surface of the holder. The upper surface may have a flat non-slip mat adhered thereto to provide a non-slip surface for resting the object thereon.

The holder may be made using an injection moulding method. The holder may be made from suitable strong structural plastics. The outer panels comprising the inner and outer walls, and the top flat (or upper annular) plate are preferably unitarily formed of a single piece of plastic. Alternatively, the inner and outer walls may be separately made from metal or other rigid and hard-wearing sheet or plate material. The inner and outer walls may be made of Aluminium/SS sheeting. The top (upper annular) plate may be made from metal plate material.

### Peripheral Body and Mobile Structure

The peripheral body is formed as part of the holder. The peripheral body may be integrated with the mobile structure and includes a wheel supporting structure. The wheel supporting structure has a wheel support frame. The wheel support frame is housed in a cavity. The cavity is defined by inner and outer walls of the holder, together with an upper annular plate forming the upper surface of the holder.

The wheel set includes one or more multiple-directional wheels. The wheel set includes a plurality of multiple-directional wheels. The wheel may include a single type of wheel. The single type of wheel may be a multiple-directional wheel. The wheel set includes at least 3, and preferably 5 or 6, multiple-directional wheels and no standard, non-multiple-directional wheel types. Such an arrangement is configured to support relatively large loads between 20 - 120kg, preferably 30 - 90kg.The wheel set may include a combination of different type wheels and/or rollers. The wheel set may include 3 multiple-directional wheels and 3 standard wheels. The standard wheels are preferably undersized compared to the multi-directional wheels (specifically an omni wheel. For example, the omniwheel may have a diameter of 50mm, whereas the standard wheel is slightly smaller, at 48mm, whereby to depend slightly above an even floor or ground surface. This is so the standard wheels only come into contact with the surface when traversing a gap or change in level, for example to avoid tipping. Such an arrangement is configured to support relatively moderate loads between 2 - 60kg, preferably 10 - 50kg, and most preferably anything load up to 50kg.Preferably, the wheels are equi-spaced about the peripheral body.

The wheels are radially aligned so that the respective main axle of each wheel is aligned parallel with a nominal tangential line radially spaced from the centre and intersecting the subject wheel. The main axis of each wheel is normal to a nominal radial line extending from the centre of the dollie. The rolling direction of the front-most and leading wheel may be aligned/oriented radially to the centre of the platform, or at least include a direction vector so aligned. The main axis of each wheel is aligned substantially normal to a radial line extending from the centre of the dollie.

Preferably the maximum diameter of each of the multiple-directional wheels is identical within acceptable tolerances. The standard wheels may have a smaller maximum diameter than the multiple-directional wheels. Preferably the maximum diameter of each of the standard wheels is identical to each other standard wheel within acceptable tolerances. The difference in maximum diameter of each of the wheels may be between 2 - 5% of the maximum diameter of the multiple-directional wheels. In one preferred arrangement, the maximum diameter of the multiple-directional wheels is 50mm and the maximum diameter of the standard wheels is 48mm. The wheel sizes of the omnidirectional, and/or standard, wheels, may vary depending on the application, including load and terrain requirements.

The mobile structure is adapted to permit movement of the support dollie in any traverse direction across the support surface. The mobile structure is preferably adapted to rollably traverse small obstacles, such as gaps in concrete, tiles and timber decking, carpet strips or edges.

### Wheels

Each of the wheels includes a main axis being the axis of a corresponding main axle. The main axis of each wheel is aligned tangentially and at right angles to a nominal line extending through the centre point. The centre point is a centre-point of the dollie where the holder is substantially round or circular. In such an arrangement, the main wheel body of each wheel is oriented in radial alignment with the nominal radial line of the dollie.

The rolling resistance of the wheel about the main axis of an multiple-directional wheel may be between 5% - 99% of an averaged lateral rolling resistance of the peripheral rollers of the multiple-directional wheel. The rolling resistance of the multiple-directional wheel may be substantially less than the averaged rolling resistance of the peripheral rollers of the multiple-directional wheel.

By providing a plurality of multiple-directional wheels spaced about the peripheral body and consistently oriented to align with the inner point, the rollers of at least one multiple-directional wheel in the wheel set will offer increased rolling resistance in the direction parallel to the main axis. Therefore, the mobile structure will not roll easily on a gentle slope, for example with a 1:20 or less gradient.

The wheel set is adapted to provide at least 3 points of surface support contact corresponding to the inclusion of 3 or more wheels in the wheel set.

### BRIEF DESCRIPTION OF THE DRAWINGS

The invention as defined in the claims may be better understood from the following non-limiting description of preferred embodiments, in which:
Figure 1 is a top plan view of a dollie according to a first embodiment of the invention;
Figure 2 is a bottom isometric view of the dollie shown in Fig. 1;
Figure 3 is a top isometric view of a peripheral body and a peripheral support of the dollie shown in Fig. 1;
Figure 4 is a isometric view of the top and side of the dollie shown in Fig. 1;
Figure 5 is a top isometric view of a circular mat of the peripheral support and a wheel set of the dollie shown in Fig. 1;
Figure 6 is a top isometric view of the wheel set shown in Fig. 5;
Figure 7 is an isometric view of the underside of the peripheral body of the dollie shown in Fig. 1;
Figure 8a is a plan view of the underside of the peripheral body shown in Fig. 7;
Figure 8b is a plan view of the underside of the peripheral body according to an alternative square-shaped deck;
Figure 8c is a plan view of the footprint of the peripheral body according to an another square-shaped deck and wheel;
Figure 9 is an isometric view of a multiple-directional wheel of the wheel set shown in Fig. 6;
Figure 10 is an end elevation of the multiple-directional wheel shown in Fig. 9;
Figure 11 is a sectional view of the multiple-directional wheel shown in Fig. 10;
Figure 12 is an end elevation of a standard wheel shown in Fig. 6;
Figure 13 is an isometric view of a standard wheel shown in Fig. 12;
Figure 14 is a sectional view of the standard wheel shown in Fig. 13;
Figure 15 is a cut away side elevation of the dollie shown in Fig. 1;
Figure 16 is an isometric view of the underside of the dollie shown in Fig. 1
Figure 17a is an exploded view of the holder and a combination wheel set according to the first embodiment;
Figure 17b is an exploded view of the holder and a omni-directional wheel, wheel set according to a fourth embodiment;
Figure 18a is an underneath view of the support dollie according to the first embodiment; and
Figure 18b is an underneath view of the support dollie according to the fourth embodiment.

### DETAILED DESCRIPTION OF THE DRAWINGS

Preferred features of the present invention will now be described with particular reference to the accompanying drawings. However, it is to be understood that the features illustrated in and described with reference to the drawings are not to be construed as limiting on the scope of the invention. In describing the various embodiments of the invention, like features will be referred to using like references, with references for features of each embodiment generally preceded by 1, 2, 3, or followed by a Roman numeric sequence, such as i, ii, iii, etc. or an alphabetical sequence such as a, b, c, relative to the corresponding feature of the first embodiment. For example, a feature 10 of the first embodiment may represented as 110, 210, 310, (or n10), or 10a, 10b, 10c, (or 10x) or 10i, 10ii, 10iii, (or 10r) etc. in second, third and fourth embodiments, respectively.

The reference numbers for the features shown in the drawings are provided in the table below:

| **Ref** | **Description** | **Ref** | **Description** |
|---|---|---|---|
| 10 | dollie | 60 | Peripheral body |
| 10b,c | Alternative embodiments with square outer platform | 61 | Reinforcing web |
| 20 | object | 62 | Annular cavity |
| 22 | base | 62b | Annular cavity |
| 24 | mouth | 62c | Square or rectangular inner cavity |
| 30 | holder | 63 | Radial ribs |
| 31 | Inner point | 64 | Circumferential ribs |
| 32 | one or more points of support | 65a | Inner end of radial rib |
| 33 | Non-slip mat | 65b | Outer end of radial rib |
| 34 | Upper surface of holder | 66a | Vertical slot |
| 35 | Inner wall | 67 | Joins - Radial rib to walls |
| 36 | outer wall | 70 | Wheel set |
| 37 | Central hole | 71 | Plurality of wheels |
| 38 | Upper annular plate | 71a-c | Multiple-directional wheels |
| 39b | Upper outwardly square platform | 71i-iii | Standard wheels |
| 39c | Upper inwardly square platform | | |
| 40 | Support surface | 72 | 2mm standard wheel gap |
| 50 | Mobile structure | 73 | Multiple-directional wheel contact |
| 51 | Wheel support frame | 74 | Multiple-directional wheel main axis |
| 52 | Axle cradles | 75 | Standard wheel main axis |
| 53 | Deflectable detent | 76a | Multiple-directional wheel axle |
| 54 | buttresses | 76i | Standard wheel main axle |
| 55a | Inner post | 77 | Peripheral rollers |
| 55b | Outer post | 78a | Main wheel body of multi-wheel |
| 56a | Inner strut | 78i | Main wheel body of standard wheel |
| 56b | Outer strut | X | Centre point |
| 57a | Inner arm | L | Nominal radial line through wheels 71i and 71c |
| 57b | Outer arm | r | Nominal radial lines extending from centre point X |
| 58 | Cradle base | | |
| T1,T2 | Travel direction of multiple-directional wheels with vector component transverse main rolling direction M | | |
| D | Travel direction normal to axis of standard wheel | | |
| D1 | Travel direction normal to main axis of multiple-directional whee | | |
| M | Rolling direction of at least 2 of the standard wheels transverse to direction D | | |

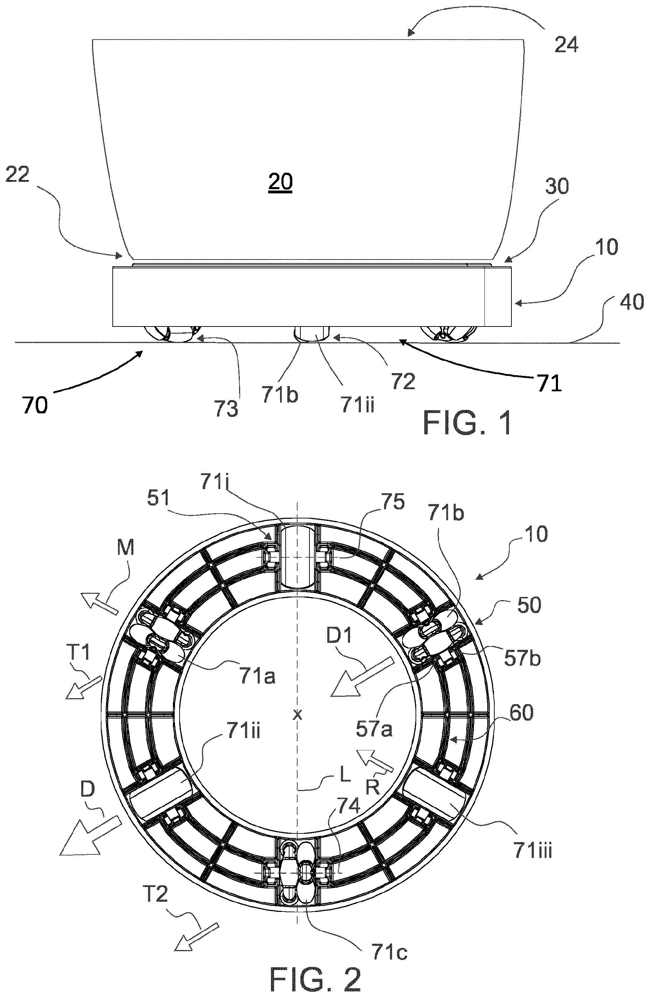

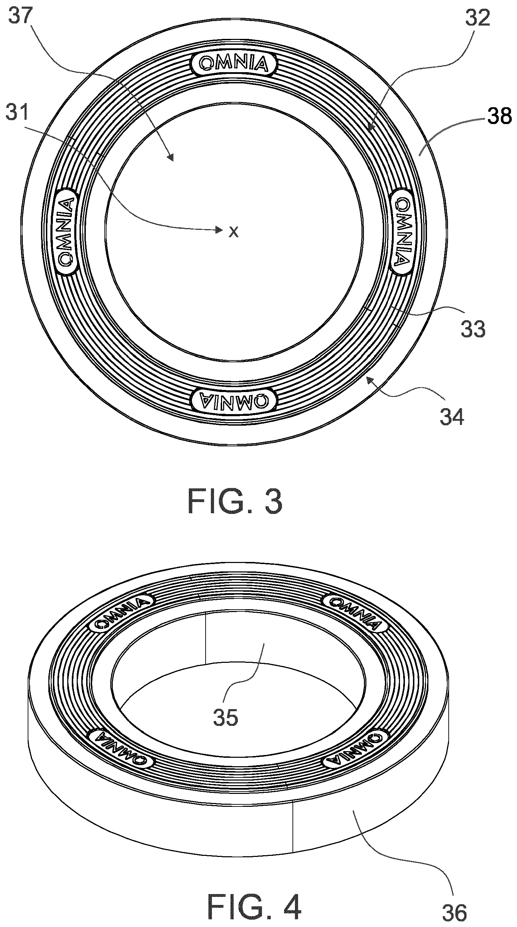

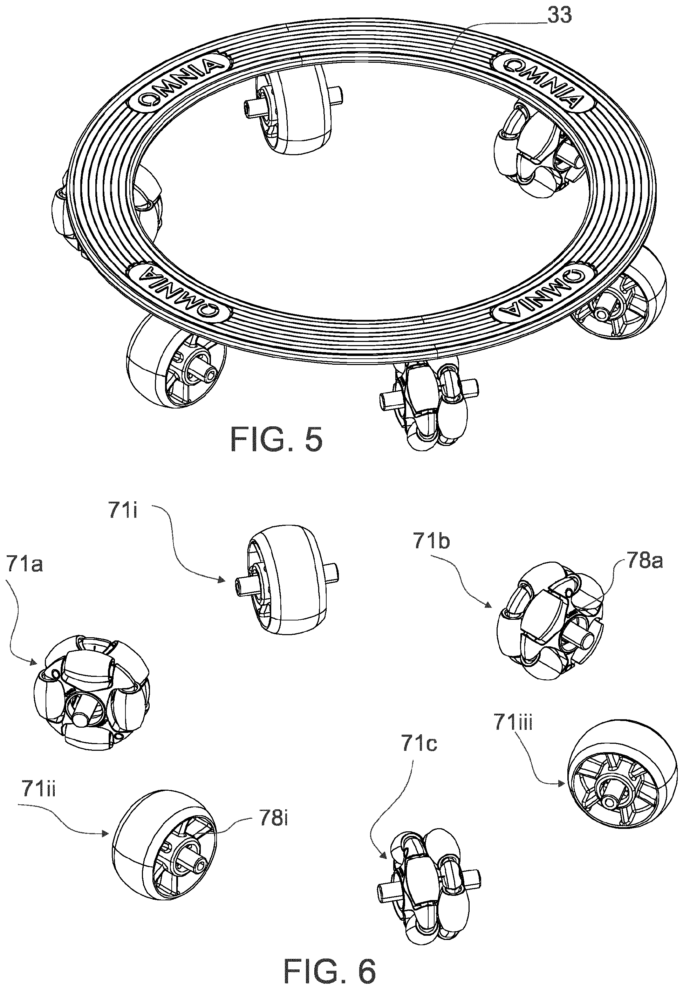

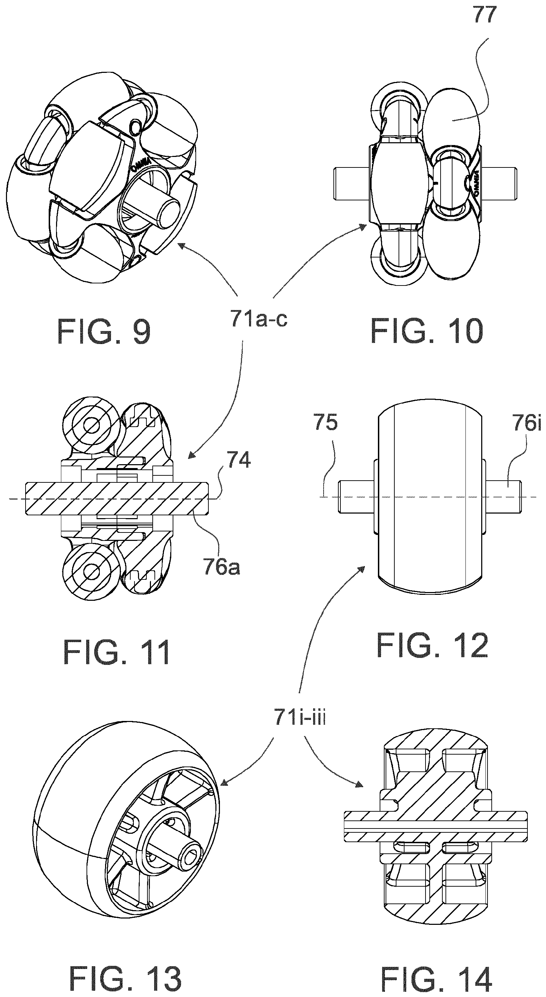

Referring to Figs. 1 - 18b, there is shown a dollie (10) for supporting an object (20), the dollie comprising:
a holder (30) adapted to support the object above a support surface (40) such
that the object rests securely on or in, or is secured to, one or more points of support (32) on the holder;
a mobile structure (50) that supports the holder above the support surface and comprises an outer peripheral body (60) and a wheel set comprising a plurality of wheels;
characterised in that:
   each wheel of the plurality of wheels:
      is spaced radially from a centre point (31) of the holder;
      is aligned to rotate in a plane extending radially from the centre point;
      is spaced about the peripheral body from each other adjacent wheel of the wheel set; and
   has a fixed main axis (74,75) of rotation oriented transverse to a radial line (r) extending from the centre point; the wheel set includes three or more omni-wheels (71a-c); and
   a wheel support frame (51) of each wheel is housed in a cavity defined by inner and outer walls of the holder.

### Support Surface

Depending on the application, the support surface is typically the ground, a floor, or a platform, etc.

### Object to be Supported

Depending on the application, the object may be an artistic display, such as a sculpture, and/or a plant, including a pot plant. In the embodiment shown in Figure 1, the object is a pot plant. The dollie is intended for objects that are relatively heavy and pose a problem for the average person to lift. The object may be at least 5 kg in weight, and the dollie may be configured and rated for different sized and weighted objects. In the present example, the pot plant weighs 7kg and the dollie is rated to support a variable loads, including loads of up to 50 kg where a wheel set of 3 omniwheels 71a-c is provided, and up to 90 kg where, for example, a wheel set of 6 omniwheels 71a-c is provided. The object may be substantially cylindrical and may have a slight conical shape wherein the base 22 is narrower than the mouth 24.

### Support Dollie

The dollie is a mobile support structure adapted to hold the object on a long time and/or permanent basis.

### Holder

The holder 30 shown in Figs. 1 - 4, 7, 8a, and 15 - 18b, is a circular structure, being substantially toroidal or doughnut/donut in shape, having a cylindrical inner wall 35, a cylindrical outer wall 36 and the upper surface being flat. The holder defines a central hole 37 within which lies the virtual inner point 31. The central hole may be defined by a part-cylindrical or frusto-conical inner-facing wall. The holder may also be square or rectangular. Common sizes of pots in plan are 450mmx450mm, 350mmx800mm and 450mmx1000mm, whereby a square or rectangular platform may be the most appropriate support shape, although there are many variations in pot plant size and shape.

In the present application, the base of the object will be sufficiently broad to extend across the central hole, such that the object rests securely on the mat, held in place by the objects own weight.

The holder comprises one or more points of support 32 to support the object in place. The holder includes a peripheral support surface in the form of a non-slip mat being a flexible circular plate adhered to a correspondingly circular upper surface 34 of the holder. The peripheral support corresponds in shape and configuration to the peripheral body. The peripheral support and the peripheral body are integrally formed as part of the same structure. The combined peripheral support and peripheral body structure support the mobile structure and is adapted to support the object.

The holder is made using an injection moulding method. The holder may be made from suitable strong structural plastics. The outer panels comprising the inner and outer walls, and the top flat plate are preferably unitarily formed of a single piece of plastic. Advantageously, the dollie is made from a number of recyclable plastic materials. Preferably, the support is made from a single moulded/die cast unit.

### Peripheral Body and Mobile Structure

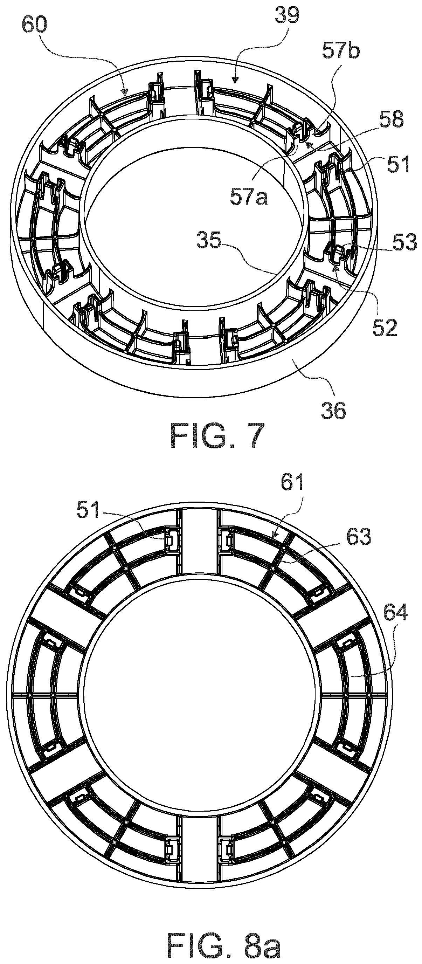

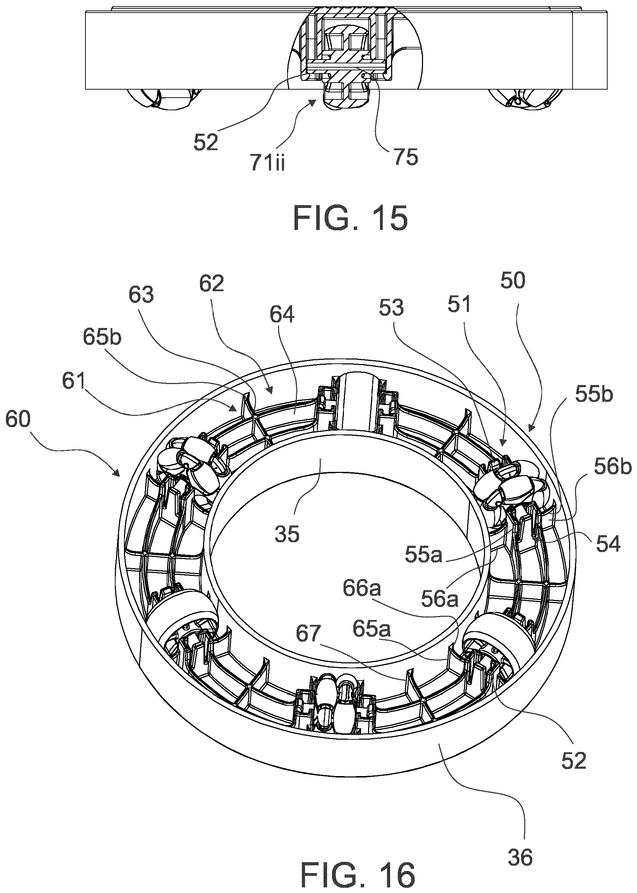

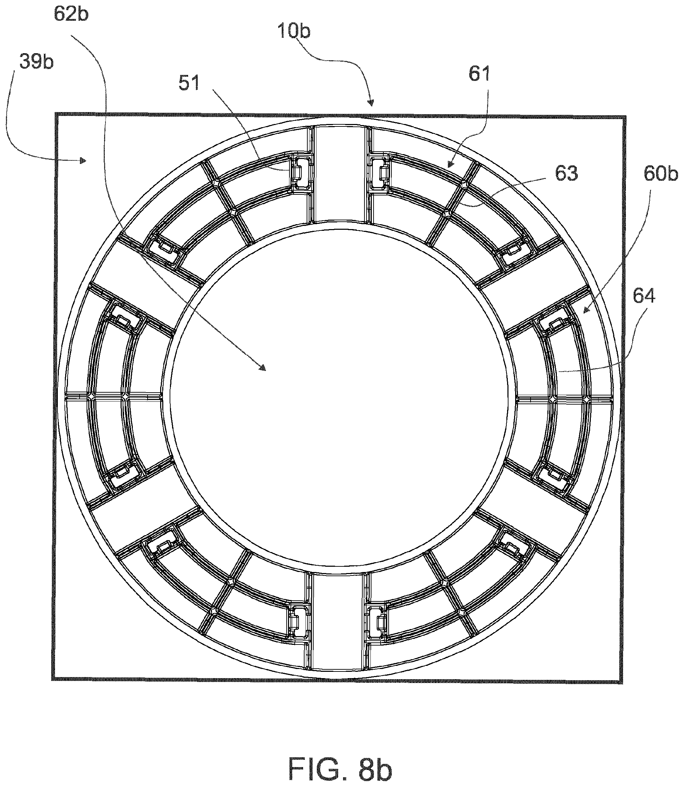

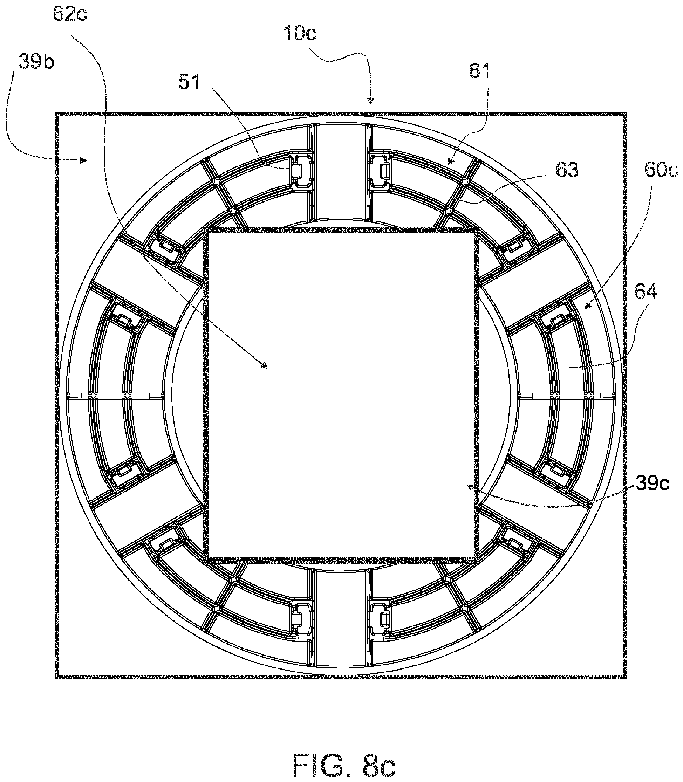

Referring to Figs. 8a and 16, an array of internal ribs 63,64 form a reinforcing web 61. The reinforcing web is integral with a wheel support frame. The reinforcing web comprises radially aligned ribs 63 and a double race of radially spaced circumferential ribs 64. Alternative embodiments are shown in Figs. 8 b - c that show a dollie 10b,c with a square or rectangular deck 39b,c and a peripheral body 60b that is annular, as in the first embodiment, or is a square shaped platform 39c that is square or rectangular in plan and has a square or rectangular central hole 62c. With the peripherally and radially spaced wheels 71, and alignment of the wheels 71 radially from the centre of the dollie 10,10b,c, irrespective of the shape of the peripheral body 60,60b,c or the upper platform 38,39b,c, the dollie 10,10b,c performs satisfactorily to maintain stability under and iun support of the load.

The peripheral body is, in the first embodiment shown, formed as part of the holder. The peripheral body is integrated with the mobile structure and includes the wheel supporting structure in the form of the wheel support frame housed in an annular cavity 62 defined by the inner wall 35, the outer wall 36 and an upper annular plate 38 forming the upper surface of the holder. The wheel set includes 3 multiple-directional wheels 71a-c and 3 standard wheels 71i-iii. The wheels are circumferentially equispaced about the peripheral body. The standard wheels may be optionally omitted, such that the mobile structure comprises only multiple-directional wheels and no standard wheels. In the case of a circular peripheral body 60, 3 or more omni wheels 71a-c are included in the wheelset 70. Preferably, the wheelset 70 comprises a combination of 3 or more omni wheels 71a-c and a complement of standard wheels 71--iii, the number depending on size, load and the surface area of the platform 34 to be accommodated. The preferred wheelset 70 configurations in this embodiment are:
1. 3 omniwheels 71a-c;
2. 3 omniwheels 71a-c and a complement of 3 standard wheels 71i-iii; or
3. 6 x omniwheels 71-a-c.

The circumferential ribs extend between a set of wheel support frames 51 corresponding to the wheels of the wheel set in number. Each wheel support frame is advantageously identical, there being no difference between wheel support frames of the multiple-directional wheels and the standard wheels. Each wheel support frame comprises a pair of spaced and opposed axle cradles, each coacting with an adjacent deflectable detent 53 that is adapted to deflect to trap an end of an axle in the corresponding cradle. Each pair of axle cradles is circumferentially located and equispaced around the peripheral body.

The radial ribs 63 terminate at their radially inner and outer ends 65a,b in a butted join with vertical slot 66a that do not extend through the inner or outer walls 35,36. Alternatively, where the reinforcing web 61 and wheel support frame 51 are integrally or unitarily formed with the inner and outer walls 35,36 from one moulded or cast piece, the joins 67 are moulded or cast unitary or integrally formed joins.

The wheel support frame further includes buttresses 54 that form a supporting structure for the axle cradle and the deflectable detent. Each buttress includes a pair of posts, including an inner post 55a and an outer post 55b that are respectively supported by substantially radially aligned inner and outer struts 56a,b that extend substantially normally from the respective inner and outer posts to the inner and outer walls 35,36. The strut ends join with the inner and outer walls 35,36 in a manner identical to the radial rib to wall joins 67. The inner and outer posts each comprise mirrored L-shaped structures that each have an inner or outer arm 57a,b, that is substantially radially aligned relative to the holder. The inner and outer arms join to form a cradle base 58 of the axle cradle at their respective lower ends. If the dollie is seen as oriented with the wheels on the support surface, the cradle base supports an end of the main axle against vertical displacement in an upward direction, and the deflectable detent traps the main axle in the cradle and resists vertical displacement thereof in a downward direction.

### [Support: outer wall is referenced 36 in the Reference Table above]

The mobile structure is adapted to permit movement of the support dollie in any direction across the support surface. The wheel set is capable of rollably traversing small obstacles, such as carpet strips or edges.

### Wheels

The multiple-directional wheels are capable of rotation about their main axes 74, as well as their respective peripheral rollers 77 enabling transverse directional D travel having a vector component T1,T2 in a direction D substantially at right angles to the main axis 75 of one of the standard wheels as shown in Fig. 2. The standard wheels 71i-iii do not contact a flat and smooth floor or ground surface, but only make contact when traversing obstructions or gaps. The platform 34 can move in all directions/vectors with minor variations in the degree of effort required, depending on the sum of the vector components transverse to the main axes 74.

However, advantageously, each of the standard wheels 71i-iii are raised slightly above support surface contact as shown by the gap 72 represented in Fig. 1. In the same drawing one of the peripheral rollers of the diagonally opposed multiple-directional wheel 71b is shown making ground-contact with the support surface. This can be achieved by either raising the height of the standard wheel axes or providing standard wheels with a slightly smaller maximum diameter. In the present embodiment, the maximum diameter of the standard wheels is 48mm and the maximum diameter of the multiple-directional wheels is 50mm. Under normal loads of 5 - 50kg (the mass of the object in this example), the standard wheel gap is sufficient to ensure that at least two of the standard wheels for which their rolling direction is transverse to direction D do not provide significant frictional resistance to the rolling of the wheel set in direction D. The standard wheels 71i-iii can also offer some load support to avoid long term creep/deflection of the omni wheels 71a-c if overloaded.

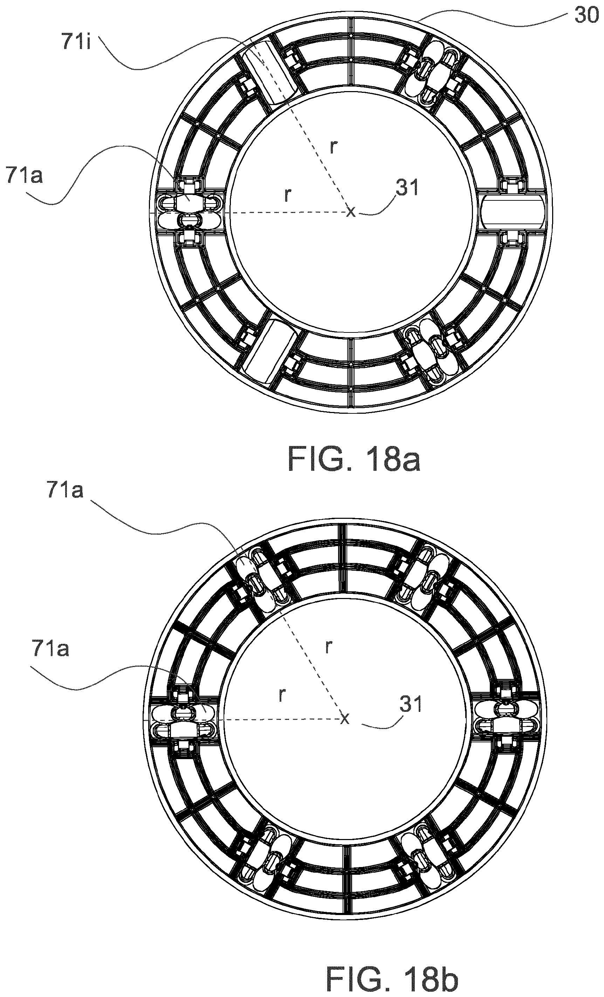

Referring to Figures 2 and 18a-b, the main axis of each of the multiple-directional and standard wheels 71i-iii is aligned tangentially around the peripheral body and is at right angles to nominal radial lines L,r extending through the centre-point X,31 of the substantially round or circular dollie 10. The main wheel body 78a,i of each wheel 71a-c,i-iii is oriented in radial alignment with each of the nominal radial line L,r of the dollie 10.

### [Support: radial lines L,r are described here and referenced in Figures 2 and 18a - 18b]

The rolling resistance of each multiple-directional wheel may be between 5% - 99% of an averaged lateral rolling resistance of the peripheral rollers of the multiple-directional wheel. The rolling resistance of the multiple-directional wheel may be substantially less than the averaged rolling resistance of the peripheral rollers of the multiple-directional wheel. By orientating the multiple directional wheels 71a-c radially, a higher level of inertia may need to be overcome to commence movement, thereby avoiding the dollie 10 rolling away without the need for a braking mechanism. It also provides more consistent and intuitive force to create movement in all directions (contrary to that of a swivel castor dollie).

By providing a plurality of multiple-directional wheels spaced about the peripheral body and consistently oriented to align with the inner point, the rollers of at least one multiple-directional wheel in the wheel set will offer increased rolling resistance in the direction parallel to the main axis. Therefore, the mobile structure will not roll easily on a gentle slope, for example with a ~1:12 (~4.76% or ~8.3%) or less gradient.

The wheel set is adapted to provide at least 3 points of surface support contact corresponding to the inclusion of 3 or more wheels in the wheel set.

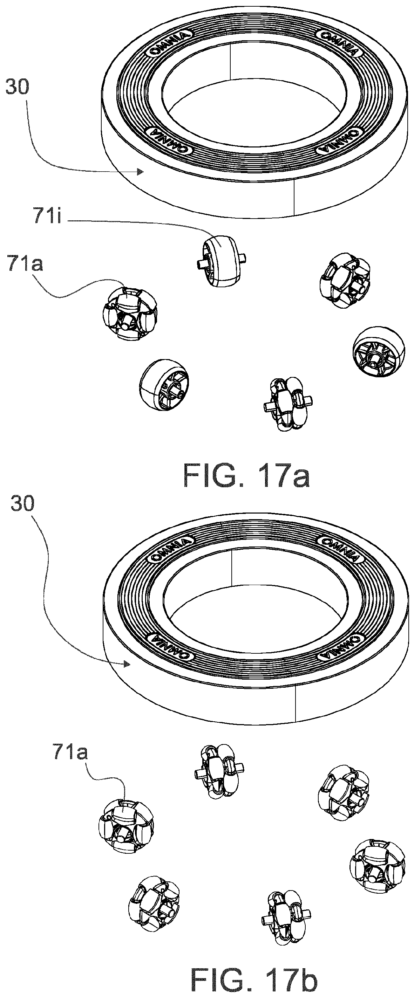

In Figures 17a - 18b, there is shown the holder and wheel set combinations of the first and fourth embodiments.

In the fourth embodiment shown in Figs. 17b and 18b, the wheel set comprises a set of six identical 50mm diameter omnidirectional wheels aligned such that their main wheel body rotates in a plain and adapted to travel in a direction that is radially aligned relative to a centre point x of the holder.

In Figs. 18a-b, the holder is identical for each of the first and fourth embodiments, and comprises 6 tight-fitting housing cavities adapted to each house a respective standard roller (48mm in diameter) or omniwheel (50mm in diameter).

The wheels in each case are circumferentially equally spaced and the underside of the holder is strengthened between each wheel cavity with multiple rows of circumferentially aligned ribs and a single central radial rib. Small recesses either side of the wheel cavity are provided to secure each respective end of each main wheel axle. The radial depth of the holder body (defined inwardly and outwardly by respective inner and outer cylindrical walls) is large enough to envelop an outermost and an innermost extent of each wheel main body, so that each wheel may be wholly contained within a footprint of the corresponding cavity.

### DEFINITIONS and QUALIFICATIONS

The multiple-directional wheels as described in this specification may each include a plurality of peripheral rollers supported by a wheel frame. A suitable multiple-directional wheel is described in the international publication No. WO20916109867. The multiple-directional wheel may have multiple adjacent and circumferentially offset races of peripheral rollers, such that, for each multiple-directional wheel, effective support surface-engaging contact is made by at least one peripheral roller of the multiple-directional wheel. The multiple-directional wheel preferably have 3 - 8, more preferably 3 - 5, and most preferably 4, peripheral rollers in each race of rollers. The multiple-directional wheel is a so-called omni-wheel.

Standard wheels as described in this specification include single body wheels with a single rotational axis and are not multiple-directional wheels. One or more of the standard wheels may be substituted with caster wheels having a substantially upright or a vertical pivot. The standard wheels 71i-iii may be used instead of omniwheels 71a-c for cost reduction reasons and as a stability aid during movement. If cost is not a factor, a preferable wheelset 70 would have with 5 or 6 omniwheels 71a-c only.

Providing 3 omniwheels 71a-c gives the dollie 10 excellent uniform distribution of load and stability on uneven surfaces, and caters for the required load capacity and consistent mobility.

The additional 3 low cost fixed standard wheels 71i-iii allows for good traversing performance over gaps etc. whilst reducing the risk of refusal or rapid deceleration (and thus tipping over) when moving.

3 omni wheels 71a-c provide a stable wheelset 70. However, given the variability in the shape of pots 20, the base 22 ideally extends beyond the pot and when moving there is still a risk of the pot tipping over if an obstruction resulting in refusal or rapid deceleration is encountered. The additional standard wheels 71i-iii and the orientation of the wheels 71 overcome this. When the wheels 71a-c are aligned tangentially, the rollers 77 can encounter an obstruction directly parallel to the roller 77 whereas this cannot occur when the wheels 71 are radially aligned. Further, the additional wheels 71i-iii allow the encountering wheel 71 to cantilever and float across a gap.

Throughout the specification and claims the word "comprise" and its derivatives are intended to have an inclusive rather than exclusive meaning unless the contrary is expressly stated or the context requires otherwise.

## Claims

1. A dollie (10) for supporting an object (20), the dollie comprising:
a holder (30) adapted to support the object above a support surface (40) such that the object rests securely on or in, or is secured to, one or more points of support (32) on the holder;
a mobile structure (50) that supports the holder above the support surface and comprises a peripheral body (60) and a wheel set comprising a plurality of wheels;
**characterised in that**:
each wheel of the plurality of wheels:
is spaced radially from a centre point (31) of the holder;
is aligned to rotate in a plane extending radially from the centre point;
is spaced about the peripheral body from each other adjacent wheel of the wheel set; and
has a fixed main axis (74,75) of rotation oriented transverse to a radial line (r) extending from the centre point; the wheel set includes three or more omni-wheels (71a-c); and
a wheel support frame (51) of each wheel is housed in a cavity defined by inner and outer walls of the holder.

2. The dollie as claimed in Claim 1, wherein the fixed main axis of each wheel is supported by the wheel support frame which comprises a pair of spaced and opposed axle cradles (52), each pair of cradles being circumferentially located and equispaced around the peripheral body.

3. The dollie as claimed in Claim 1, wherein the peripheral body is part of the holder and is integrated with the mobile structure that includes each of the wheel support frames together with an upper surface (34) of the holder.

4. The dollie as claimed in Claim 3, wherein the upper surface is a peripheral support that corresponds in shape, configuration or footprint to the peripheral body.

5. The dollie as claimed in Claim 3, wherein the holder includes an array of internal ribs (63,64) that form a reinforcing web (61).

6. The dollie as claimed in any one of the previous claims, wherein the holder is a circular structure that defines a central hole.

7. The dollie as claimed in Claim 6, wherein the central hole is defined by a part-cylindrical or frusto-conical inner-facing wall (35).

8. The dollie as claimed in any one of Claims 5 - 7, wherein the internal ribs are radially aligned.

9. The dollie as claimed in any one of Claims 5 - 8, wherein the reinforcing web comprises a double race of radially spaced circumferential ribs (64).

10. The dollie as claimed in Claim 8 or 9, wherein the radially aligned ribs terminate at their radially inner and outer ends (65a,b) in a butted join with a vertical slot (66) that does not extend through the inner or outer walls.

11. The dollie as claimed in any of Claims 5 - 10, wherein the holder includes circumferential ribs that extend between the wheel support frame comprised of a set of wheel support frames (51) corresponding to the wheels of the wheel set in number, each wheel support frame being identical and comprising a pair of spaced and opposed axle cradles, each pair of axle cradles being circumferentially located and equispaced around the peripheral body to support a main axle of one of the wheels.

12. The dollie as claimed in any one of the previous claims, wherein the plurality of wheels includes 5 or 6 omni wheels and does not include any standard, non-multiple-directional wheel types.

13. The dollie as claimed in Claim 1, wherein the plurality of wheels of the wheel set includes 3 omni wheels and 3 standard wheels.

14. The dollie as claimed in Claim 13, wherein the standard wheels are undersized compared to the omni wheels so that the standard wheels only come into contact with a ground surface when traversing a gap or change in level.

15. The dollie as claimed in Claim 11 or 12, wherein the wheel support frame further includes buttresses (54) that form a supporting structure for each axle cradle, each buttress including a pair of posts, including an inner post (55a) and an outer post (55b), that each comprise mirrored L-shaped structures that have an inner or outer arm (57a,b), that is substantially radially aligned relative to the holder and join to form a cradle base (58) of the axle cradle at their respective lower ends, whereby, with the wheels on the support surface, the cradle base supports an end of the main axle against vertical displacement in an upward direction, and a deflectable detent traps the main axle in the cradle and resists vertical displacement thereof in a downward direction.

## Patentansprüche

1. Dolly (10) zum Tragen eines Objekts (20), wobei der Dolly Folgendes umfasst:
eine Halterung (30), die dazu ausgelegt ist, den Gegenstand über einer Tragfläche (40) zu tragen, so dass der Gegenstand sicher auf oder an einem oder mehreren Tragpunkten (32) auf der Halterung liegt oder daran befestigt ist;
eine mobile Struktur (50), die die Halterung über der Tragfläche trägt und einen Umfangskörper (60) und einen Radsatz, der mehrere Räder umfasst, umfasst;
**dadurch gekennzeichnet, dass**
jedes Rad der mehreren Räder:
von einem Mittelpunkt (31) der Halterung radial beabstandet ist;
so ausgerichtet ist, sich in einer Ebene zu drehen, die sich vom Mittelpunkt radial erstreckt;
über den Umfangskörper von jedem anderen benachbarten Rad des Radsatzes beabstandet ist; und
eine feste Hauptachse (74,75) der Drehung aufweist, die quer zu einer radialen Linie (r) orientiert ist, die sich vom Mittelpunkt erstreckt; wobei der Radsatz drei oder mehr Omniräder (71a-c) enthält; und
ein Radtragrahmen (51) jedes Rades in einem Hohlraum untergebracht ist, der durch die Innen- und Außenwände der Halterung definiert ist.

2. Dolly nach Anspruch 1, wobei die feste Hauptachse jedes Rades durch den Radtragrahmen getragen wird, der ein Paar beabstandeter und entgegengesetzter Achsgestelle (52) umfasst, wobei jedes Paar von Gestellen in Umfangsrichtung angeordnet und um den Umfangskörper äquidistant beabstandet ist.

3. Dolly nach Anspruch 1, wobei der Umfangskörper Teil der Halterung ist und mit der mobilen Struktur integriert ist, die jeden der Radtragrahmen zusammen mit einer Oberseite (34) der Halterung enthält.

4. Dolly nach Anspruch 3, wobei die Oberseite ein Umfangsträger ist, der in Form, Konfiguration oder Grundfläche dem Umfangskörper entspricht.

5. Dolly nach Anspruch 3, wobei die Halterung eine Anordnung von Innenrippen (63, 64) umfasst, die einen Verstärkungssteg (61) bilden.

6. Dolly nach einem der vorstehenden Ansprüche, wobei die Halterung eine kreisförmige Struktur ist, die ein zentrales Loch definiert.

7. Dolly nach Anspruch 6, wobei das zentrale Loch durch eine teilzylindrische oder kegelstumpfförmige Innenwand (35) definiert ist.

8. Dolly nach einem der Ansprüche 5-7, wobei die Innenrippen radial ausgerichtet sind.

9. Dolly nach einem der Ansprüche 5-8, wobei der Verstärkungssteg einen Doppellaufring aus radial beabstandeten Umfangsrippen (64) umfasst.

10. Dolly nach Anspruch 8 oder 9, wobei die radial ausgerichteten Rippen an ihren radial inneren und äußeren Enden (65a, b) in einer Stumpfverbindung mit einem vertikalen Schlitz (66) enden, der sich nicht durch die Innen- oder Außenwände erstreckt.

11. Dolly nach einem der Ansprüche 5-10, wobei die Halterung Umfangsrippen enthält, die sich zwischen dem Radtragrahmen erstrecken, der aus einem Satz von Radtragrahmen (51) besteht, deren Anzahl der Anzahl der Räder des Radsatzes entspricht, wobei jeder Radtragrahmen völlig gleich ist und ein Paar beabstandeter und entgegengesetzter Achsgestelle umfasst, jedes Paar von Achsgestellen in Umfangsrichtung angeordnet ist und um den Umfangskörper äquidistant beabstandet ist, um eine Hauptachse eines der Räder zu tragen.

12. Dolly nach einem der vorstehenden Ansprüche, wobei die mehreren Räder 5 oder 6 Omniräder enthalten und mehrfachdirektionale Standardradtypen enthalten.

13. Dolly nach Anspruch 1, wobei die mehreren Räder des Radsatzes 3 Omniräder und 3 Standardräder enthalten.

14. Dolly nach Anspruch 13, wobei die Standardräder im Vergleich zu den Omnirädern unterdimensioniert sind, so dass die Standardräder nur beim Durchfahren eines Lochs oder einer Höhenänderung mit einer Bodenoberfläche in Kontakt kommen.

15. Dolly nach Anspruch 11 oder 12, wobei der Radtragrahmen ferner Stützen (54) enthält, die eine Tragstruktur für jedes Achsgestell bilden, wobei jede Stütze ein Paar von Pfosten einschließlich eines inneren Pfostens (55 a) und eines äußeren Pfostens (55b) enthält, die jeweils gespiegelte L-förmige Strukturen umfassen, die einen inneren oder einen äußeren Arm (57a, b) aufweisen, die im wesentlichen radial auf die Halterung ausgerichtet sind und sich verbinden, um eine Gestellbasis (58) des Achsgestells an ihren jeweiligen unteren Enden zu bilden, wodurch die Gestellbasis mit den Rädern auf der Tragfläche ein Ende der Hauptachse gegen eine vertikale Verschiebung in einer Aufwärtsrichtung trägt und eine ablenkbare Rastnase die Hauptachse im Gestell einfängt und deren vertikaler Verschiebung in einer Abwärtsrichtung widersteht.

## Revendications

1. Chariot (10) pour supporter un objet (20), le chariot comprenant :
un dispositif de maintien (30) conçu pour supporter l'objet au-dessus d'une surface de support (40) de sorte que l'objet repose solidement sur ou dans, ou est fixé à, un ou plusieurs points de support (32) sur le dispositif de maintien ;
une structure mobile (50) qui supporte le dispositif de maintien au-dessus de la surface de support et qui comprend un corps périphérique (60) et un ensemble de roues comprenant une pluralité de roues ;
**caractérisé en ce que** :
chaque roue de la pluralité de roues :
est espacée radialement d'un point central (31) du dispositif de maintien ;
est alignée en rotation dans un plan s'étendant radialement à partir du point central ;
est espacée autour du corps périphérique de chaque autre roue adjacente de l'ensemble de roues ; et
a un axe principal fixe (74, 75) de rotation orienté transversalement à une ligne radiale (r) s'étendant à partir du point central ; l'ensemble de roues comprend trois roues omnidirectionnelles (71a-c) ou plus ; et
un cadre de support de roue (51) de chaque roue est logé dans une cavité définie par les parois intérieure et extérieure du dispositif de maintien.

2. Chariot selon la revendication 1, l'axe principal fixe de chaque roue étant supporté par le cadre de support de roue qui comprend une paire de berceaux d'essieu espacés et opposés (52), chaque paire de berceaux étant située circonférentiellement et espacée de façon équidistante autour du corps périphérique.

3. Chariot selon la revendication 1, le corps périphérique faisant partie du dispositif de maintien et étant intégré à la structure mobile qui comprend chacun des cadres de support de roue conjointement à une surface supérieure (34) du dispositif de maintien.

4. Chariot selon la revendication 3, la surface supérieure étant un support périphérique qui correspond en forme, configuration ou empreinte au corps périphérique.

5. Chariot selon la revendication 3, le dispositif de maintien comprenant un réseau de nervures internes (63, 64) qui forment une âme de renforcement (61).

6. Chariot selon l'une quelconque des revendications précédentes, le dispositif de maintien étant une structure circulaire qui définit un trou central.

7. Chariot selon la revendication 6, le trou central étant défini par une paroi (35) tournée vers l'intérieur partiellement cylindrique ou tronconique.

8. Chariot selon l'une quelconque des revendications 5 à 7, les nervures internes étant alignées radialement.

9. Chariot selon l'une quelconque des revendications 5 à 8, l'âme de renforcement comprenant une double bague de nervures (64) circonférentielles radialement espacées.

10. Chariot selon la revendication 8 ou 9, les nervures alignées radialement se terminant au niveau de leurs extrémités radialement intérieure et extérieure (65a, b) en une jonction aboutée avec une fente verticale (66) qui ne s'étend pas à travers les parois intérieure ou extérieure.

11. Chariot selon l'une quelconque des revendications 5 à 10, le dispositif de maintien comprenant des nervures circonférentielles qui s'étendent entre le cadre de support de roue composé d'un ensemble de cadres de support de roue (51) correspondant au nombre de roues de l'ensemble de roues, chaque cadre de support de roue étant identique et comprenant une paire de berceaux d'essieu espacés et opposés, chaque paire de berceaux d'essieu étant située circonférentiellement et espacée de façon équidistante autour du corps périphérique pour supporter un essieu principal de l'une des roues.

12. Chariot selon l'une quelconque des revendications précédentes, la pluralité de roues comprenant 5 ou 6 roues omnidirectionnelles et ne comprenant aucun type de roue standard, non multidirectionnel.

13. Chariot selon la revendication 1, la pluralité de roues de l'ensemble de roues comprenant 3 roues omnidirectionnelles et 3 roues standard.

14. Chariot selon la revendication 13, les roues standard étant sous-dimensionnées par rapport aux roues omnidirectionnelles de sorte que les roues standard n'entrent en contact avec une surface du sol que lors du franchissement d'un espace ou d'un changement de niveau.

15. Chariot selon la revendication 11 ou 12, le cadre de support de roue comprenant en outre des contreforts (54) qui forment une structure de support pour chaque berceau d'essieu, chaque contrefort comprenant une paire de montants, y compris un montant intérieur (55a) et un montant extérieur (55b), qui comprennent chacun des structures en forme de L en miroir qui ont un bras intérieur ou extérieur (57a, b), qui est sensiblement aligné radialement par rapport au dispositif de maintien et s'assemble pour former une base de berceau (58) du berceau d'essieu au niveau de leurs extrémités inférieures respectives, moyennant quoi, avec les roues sur la surface de support, la base de berceau supporte une extrémité de l'axe principal à l'encontre d'un déplacement vertical vers le haut, et un cran pouvant être dévié bloque l'axe principal dans le berceau et résiste à son déplacement vertical vers le bas.
